# EUROPEAN PATENT SPECIFICATION

(11) **EP 4 139 752 B1**
(45) Date of publication and mention of the grant of the patent: **03.12.2025**
(21) Application number: 20720803.4
(22) Date of filing: 20.04.2020
(51) Int. Cl.: G05B 19/042, G06N 3/04, G06N 20/00, G05B 23/02

(54) **A FAULT STATE DETECTION APPARATUS**
VORRICHTUNG ZUR FESTSTELLUNG EINES FEHLERZUSTANDES
APPAREIL DE DÉTECTION D'ÉTAT DE PANNE

(43) Date of publication of application: 01.03.2023
(73) Proprietor: ABB SCHWEIZ AG, 5400 Baden (CH)
(72) Inventor: MUTZL, Felix, 90403 Nuremberg (DE); PRAJAPATI, Nilesh Shamji, Bangalore 560092 (IN); OBERMEIER, Sebastian, 5323 Rietheim (CH)
(74) Representative: Maiwald GmbH
(86) International application number: PCT/EP2020/061000
(87) International publication number: WO 2021/213614

(56) References cited:
- WO-A1-2020/036818
- WO-A1-2020/040764
- US-A1- 2018 329 935

## Description

### FIELD OF THE INVENTION

The present invention relates an industrial data monitoring apparatus, and a method of industrial data monitoring.

### BACKGROUND OF THE INVENTION

When using Machine Learning (ML) and Artificial Intelligence (Al), the typical flow is to use input data to train a so-called "machine learning model". This trained model is then deployed into a live environment and constantly fed with input data. Based on the training, an output is calculated and returned.

WO2020/036818A1 describes a system and method for forecasting failures in industrial machines, including: receiving raw sensory inputs collected from at least one machine; generating a plurality of data features based on the raw sensory inputs; selecting from the plurality of data features a plurality of indicative data features, wherein the selection is based on a distribution of the plurality of indicative data features that determines an association between the plurality of indicative data features and a machine failure; selecting, based on the plurality of indicative data features, a machine learning model; applying the selected machine learning model to the plurality of indicative data features; and determining a probability for a forthcoming machine failure.

WO2020/040764A1 describes a system for verification of the output of a sensor includes an industrial system comprising a plurality of sensors, one of the plurality of sensors being a target sensor, a plurality of machine learning networks, each machine learning network connecting a plurality of driving sensors associated with the target sensor and trained using simulation data. a selected machine learning network from the plurality of machine learning networks having an output representative of the target sensor, the selected machine learning network being trained with real-time data from the industrial plant and a processor for comparing an output of the selected machine learning network to a real output of the target sensor. It is described that based on the comparison, the real sensor output is provided as final output when the values match, and the estimated value is output when the values do not match and the sensor output is flagged as an error.

When utilizing such Machine Learning solutions for complex industrial systems (e.g. production systems), a common challenge is that devices of the same kind (e.g. robots) perform completely different actions (e.g., an arc welding robot differs from a paint robot) and may be utilized in different climate conditions. This, however, means that the trained ML model of one robot is not directly usable for a different robot. Therefore, the same ML model type needs to be individually trained with the specific input data of a specific robot.

There is a need to address this issue.

### SUMMARY OF THE INVENTION

Therefore, it would be advantageous to have an improved technique to monitor industrial data returned from industrial devices.

Appended claim 1 defines an industrial data monitoring apparatus. Appended claim 5 defines a method of industrial data monitoring. The invention and its scope of protection is defined by these claims.

The object of the present invention is solved with the subject matter of the independent claims, wherein further embodiments are incorporated in the dependent claims.

In a first aspect, there is provided an industrial data monitoring apparatus according to independent claim 1.

In an example, the processing unit is configured to access and implement a data score algorithm or function. The data score algorithm or function is configured to process the analysis of the industrial monitor data received from the processing unit for the particular device of the plurality of devices to determine the analysis result.

In an example, the machine learning environment is located on a data storage of the apparatus.

In an example, the machine learning environment is located on a memory of the apparatus.

In an example, the plurality of trained machine learning models are located on a data storage of the apparatus.

In an example, the plurality of trained machine learning models are located on a memory of the apparatus.

Thus, ML environment can comprise a a data storage that hosts the model and computing and memory capacities that facilitate the execution of the ML model.

In a second aspect, there is provided a method of industrial data monitoring according to independent claim 5.

In an example, the method comprises accessing and implementing by the processing unit a data score algorithm or function, and processing with the data score algorithm or function the analysis of the industrial monitor data received from the processing unit for the particular device of the plurality of devices to determine the analysis result.

In an example, the machine learning environment is located on a data storage of the apparatus.

In an example, the machine learning environment is located on a memory of the apparatus.

In an example, the plurality of trained machine learning models are located on a data storage of the apparatus.

In an example, the plurality of trained machine learning models are located on a memory of the apparatus.

The above aspects and examples will become apparent from and be elucidated with reference to the embodiments described hereinafter.

### BRIEF DESCRIPTION OF THE DRAWINGS

Exemplary embodiments will be described in the following with reference to the following drawing:
Fig. 1 shows a schematic illustration of a detailed example of an industrial data monitoring apparatus; and
Fig. 2 shows a schematic illustration of a detailed example of an industrial data monitoring apparatus.

### DETAILED DESCRIPTION OF EMBODIMENTS

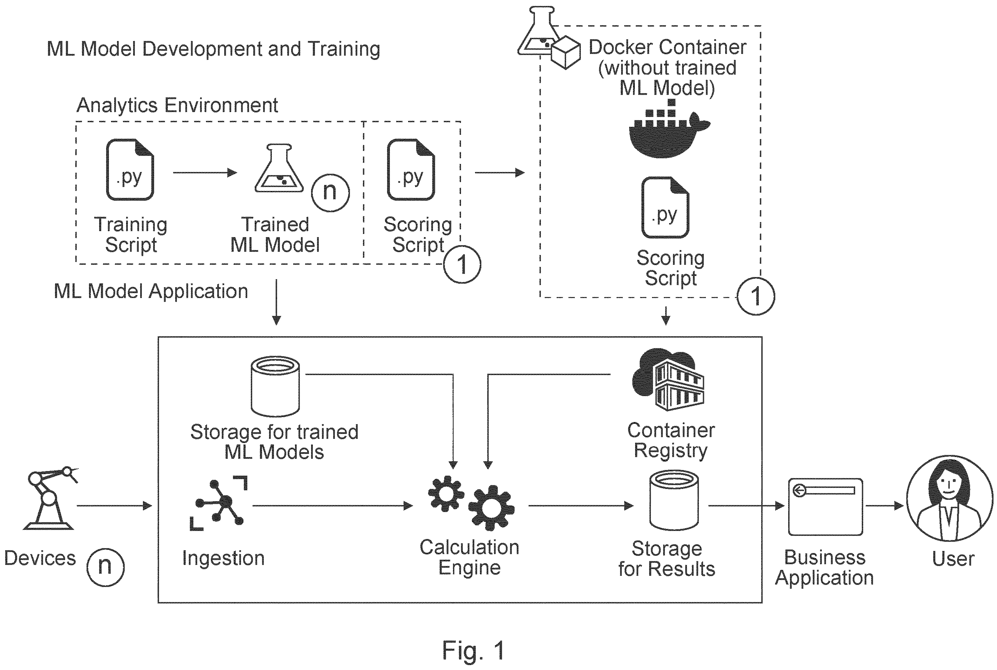

Figs. 1-2 relate to an industrial data monitoring apparatus and a method of industrial data monitoring.

The new industrial data monitoring apparatus and associated method are explained in more detailed below, where reference is made to the "docker" platform that is generally utilized for the implemention of machine learning (ML) models. When docker is invoked it utilizes images and containers. An image is a template with instructions for creating a docker container. A container is a runnable instance of an image.

Thus, traditionally the deployment of ML models is usually facilitated through containers, with as discussed above the most adopted framework for containers today being "docker". In practices this means that there are either:
a) N docker images (one per ML model);
b) 1 docker image (with all individual models inside).

Furthermore, the ML models need to be re-trained with new data on a regular basis.

Depending on the specific system context it might also be required to re-train in case the device's task changes.

The above mentioned traditional solution works well if the number of devices (i.e. individual ML models) is small. If, however, there are a lot of devices (e.g. N = 5000) that each require an individually trained ML model, then several problems arise:
1. N docker images occupy a lot of space and their creation (e.g. when re-training the ML model) takes a lot of time. In a cloud environment, this results in high costs;
2. If 1 docker image holds N trained ML models, then:
   a. The whole docker image needs to be re-created if only one ML model needs to be re-trained → inefficienct, not very flexible and is likely to result in frequent docker image re-creations and high costs;
   b. Creation of the docker image is likely to require a lot of time since each trained ML model needs to be fetched from the model registry and put into a pipeline.

Current solutions in ML model deployment work well in a small-scale setting, however these are likely to run into problems when scaling up.

The new industrial data monitoring apparatus and associated method mitigates these problems.

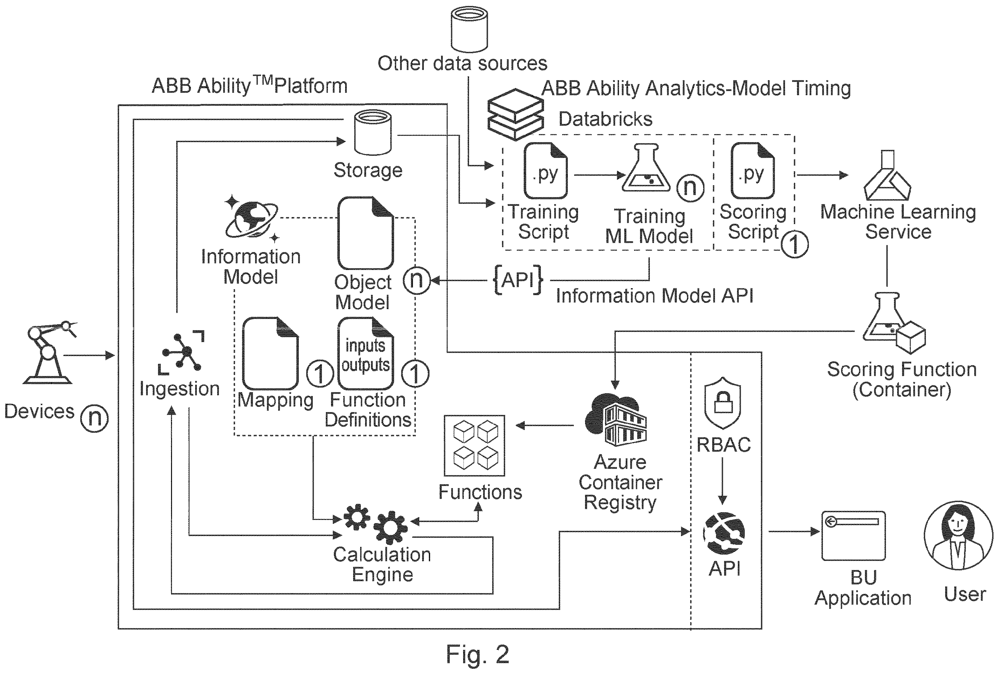

The following section first explains the new industrial data monitoring apparatus and associated method in principle, whee reference is made to Fig.1, and then in practice, applied to ABB Ability^{™} Platform, where reference is made to Fig. 2.

Referring to Fig. 1, the new industrial data monitoring apparatus and associated method provide a Flexible Multi-Model Machine Learning Deployment at Scale that is a ML solution design that enables business lines to train and deploy ML models at a large scale and in complex systems - both on cloud and edge. Trained ML models are stored outside of the docker image where they later-on are run. The docker image itself contains a script that leaves a placeholder for the trained ML model, which is filled during runtime. The "runtime" describes the actual *use* of the ML model when generating e.g. the health score of a device based on its most recent data. At this point in time the docker image expects two inputs (trained ML model, device data to generate health score from) and returns one output (device health score). The output can then be written into a suitable storage from where client applications (e.g. web-based maintenance dashboard) can consume it.

Referring to Fig. 2, the new industrial data monitoring apparatus and associated method are described with respect to the ABB Ability^{™} Platform. In its capacity as an IloT platform it provides ideal conditions to apply this concept: it enables to connect to physical devices, model their relationships using the ABB Ability^{™} Platform Information Model database as well as the necessary components to store containers (registry), results (storage) and runtime (Kubernetes based). In the Information Model, every physical device has a virtual representation in its "Object Model", that captures the its state in properties and variables. The Runtime can execute "Functions" which define input/output and refer to the required docker container.

The implementation works as follows:
1. Individual instances (N) of the ML model are trained for each device using the analytics environment (Databricks)
2. The individually trained ML models (N) are pushed into each device's Object Model (inside of ABB AbilityTM Platform Information Model)
3. The Scoring Script expects the following input (JSON payload):
   - The trained ML model file (from device's Object Model)
   - The (new) data to score (from Platform Telemetry Ingestion)
4. There is one containerized Scoring Function pushed into ABB Ability^{™} Platform Container Registry
5. Every device is mapped to the same Scoring Function Definition, which uses the device's individualy trained ML model
6. Scoring results (e.g. health score) are written into storage via the Telemetry Ingestion

Inside of ABB AbilityTM Platform the ML model serving can be configured based on customer needs. For example, the ML model can be run
- for all devices on a fixed schedule (e.g. every hour)
- for some devices at a different schedule than the rest (e.g. every 30 minutes)
- whenever new data arrives for a device
- ... and many more combinations

The same applies to re-training the ML model (Databricks). This means for example, that some devices' ML model can be re-trained every day while others are re-trained only once a month, while the dockerized Scoring Function doesn't need to be changed. Subsequently, compute resources are only used (and paid for) when needed.

The new industrial data monitoring apparatus and associated method. In principle and in detailed specific embodiments, provide the following aspects:

### Paradigm Shift

An individually trained ML Model becomes part of a device's digital identity instead of it being a compromising *somewhat best fit* for all devices.

### Modular deployment approach

ML model and runtime (docker image) are decoupled, which results in high flexibility and scalability. One docker image can be the runtime for thousands of models.

### Edge compatibility

This approach can be run both in the cloud as well as in scenarios where a permanent connection to internet is not always given ("offline edge"). In practice, the trained ML model can be kept close to where it is executed (i.e. docker image on edge device).

### Flexible docker image creation

The docker image can handle the flexible multi-model ML deployment approach and its scoring endpoint accepts the trained ML model as an input.

### Flexible orchestration of individually trained ML models

Example: A subset of devices can have their ML models re-trained at a higher frequency than the rest without the need to re-create the docker image where ML model execution takes place

### Fast ML model re-training / re-deployment

There is no need to create a new docker image, so it's enough to (re-)train the ML model and directly push it into the device's properties.

### Cost saving

Container registry consumption is drastically reduced since only 1 (instead of N) container required.

While the invention has been illustrated and described in detail in the drawings and foregoing description, such illustration and description are to be considered illustrative or exemplary and not restrictive. Other variations to the disclosed embodiments can be understood and effected by those skilled in the art in practicing a claimed invention, from a study of the drawings, the disclosure, and the dependent claims.

## Claims

1. An industrial data monitoring apparatus, comprising:
- an input unit;
- a processing unit; and
- an output unit;
wherein, the input unit is configured to receive industrial monitor data from a plurality of devices;
wherein, the processing unit is configured to access a machine learning environment;
wherein, the processing unit is configured to access a plurality of trained machine learning models, wherein the plurality of trained machine learning models each correspond to a different device of the plurality of devices, wherein the plurality of trained machine learning models are separate to the machine learning environment, and wherein each device of the plurality of devices has an associated object model, and wherein the trained machine learning model for that device is comprised within the object model for that device; wherein each trained machine learning algorithm was trained on the basis of a plurality of training industrial monitoring data and associated ground truth information, wherein the plurality of training industrial monitoring data and associated ground truth information was for the device or type of device associated with the trained machine learning algorithm, wherein the ground truth information was for the device or type of device associated with the trained machine learning algorithm; and wherein the ground truth information associated with the plurality of training industrial monitoring data comprised associated health score information for the device or type of device associated with specific training industrial monitoring data,
wherein, with respect to industrial monitor data expected to be received from a particular device of the plurality of devices, the apparatus is configured to implement the machine learning environment and run the trained machine learning model comprised within the object model for the particular device to analyse industrial monitor data received from the particular device of the plurality of devices; and
wherein, the output unit is configured to output an analysis result associated with the analysis of industrial monitor data received from the particular device of the plurality of devices, and wherein the analysis result comprises a health score of the particular device of the plurality of devices.

2. Apparatus according to claim 1, wherein the processing unit is configured to access and implement a data score algorithm or function, and wherein the data score algorithm or function is configured to process the analysis of the industrial monitor data received from the processing unit for the particular device of the plurality of devices to determine the analysis result.

3. Apparatus according to any of claims 1-2, wherein the machine learning environment is located on a data storage of the apparatus.

4. Apparatus according to any of claims 1-3, wherein the plurality of trained machine learning models are located on a data storage of the apparatus.

5. A method of industrial data monitoring, comprising:
- receiving by an input unit receive industrial monitor data from a particular device of a plurality of devices;
- accessing by a processing unit a machine learning environment;
learning model for the particular device from a plurality of trained machine learning algorithms, wherein the plurality of trained machine learning models each correspond to a different device of the plurality of devices, wherein the plurality of trained machine learning models are separate to the machine learning environment, wherein each device of the plurality of devices has an associated object model, and wherein the trained machine learning model for that device is comprised within the object model for that device; wherein each trained machine learning algorithm was trained on the basis of a plurality of training industrial monitoring data and associated ground truth information, wherein the plurality of training industrial monitoring data and associated ground truth information was for the device or type of device associated with the trained machine learning algorithm, wherein the ground truth information was for the device or type of device associated with the trained machine learning algorithm; and wherein the ground truth information associated with the plurality of training industrial monitoring data comprised associated health score information for the device or type of device associated with specific training industrial monitoring data;
- implementing by the processing unit the machine learning environment and running the trained machine learning model for the particular device to analyse the industrial monitor data received from the particular device of the plurality of devices; and
- outputting by an output unit an analysis result associated with the analysis of industrial monitor data received from the particular device of the plurality of devices, and wherein the analysis result comprises a health score of the particular device of the plurality of devices.

6. Method according to claim 5, wherein the method comprises accessing and implementing by the processing unit a data score algorithm or function, and processing with the data score algorithm or function the analysis of the industrial monitor data received from the processing unit for the particular device of the plurality of devices to determine the analysis result.

7. Method according to any of claims 5 or 6, wherein the machine learning environment is located on a memory of an apparatus according to claim 1, and/or wherein the plurality of trained machine learning models are located on a memory of the apparatus.

## Patentansprüche

1. Vorrichtung zur Überwachung von Industriedaten, umfassend:
- eine Eingabeeinheit;
- eine Verarbeitungseinheit; und
- eine Ausgabeeinheit;
wobei die Eingabeeinheit dazu eingerichtet ist, Industriedaten von einer Vielzahl von Geräten zu empfangen;
wobei die Verarbeitungseinheit dazu eingerichtet ist, auf eine Machine-Learning-Umgebung zuzugreifen;
wobei die Verarbeitungseinheit dazu eingerichtet ist, auf eine Vielzahl von trainierten Machine-Learning-Modellen zuzugreifen, wobei die Vielzahl von trainierten Machine-Learning-Modellen jeweils einem anderen Gerät der Vielzahl von Geräten zugeordnet ist, wobei die Vielzahl von trainierten Machine-Learning-Modellen von der Machine-Learning-Umgebung getrennt sind, und wobei jedem Gerät der Vielzahl von Geräten ein zugeordnetes Objektmodell zugeordnet ist, und wobei das trainierte Machine-Learning-Modell für dieses Gerät im Objektmodell für dieses Gerät enthalten ist; wobei jeder trainierte Machine-Learning-Algorithmus auf der Grundlage einer Vielzahl von Trainings-Industriemonitoringdaten und zugehörigen Ground-Truth-Informationen trainiert wurde, wobei die Vielzahl von Trainings-Industriemonitoringdaten und zugehörigen Ground-Truth-Informationen für das Gerät oder den Gerätetyp bestimmt waren, der dem trainierten Machine-Learning-Algorithmus zugeordnet ist, wobei die Ground-Truth-Informationen für das Gerät oder den Gerätetyp bestimmt waren, der dem trainierten Machine-Learning-Algorithmus zugeordnet ist; und wobei die mit der Vielzahl von Trainings-Industriemonitoringdaten verbundenen Ground-Truth-Informationen zugehörige Gesundheitswertinformationen für das Gerät oder den Gerätetyp enthalten, die mit bestimmten Trainings-Industriemonitoringdaten verbunden sind,
wobei die Vorrichtung im Hinblick auf Industriedaten, die voraussichtlich von einem bestimmten Gerät der Vielzahl von Geräten empfangen werden, dazu eingerichtet ist, die Machine-Learning-Umgebung zu implementieren und das im Objektmodell für das bestimmte Gerät enthaltene trainierte Machine-Learning-Modell auszuführen, um die von dem bestimmten Gerät der Vielzahl von Geräten empfangenen Industriedaten zu analysieren; und
wobei die Ausgabeeinheit dazu eingerichtet ist, ein Analyseergebnis auszugeben, das mit der Analyse der von dem bestimmten Gerät der Vielzahl von Geräten empfangenen Industriedaten verbunden ist, und wobei das Analyseergebnis einen Gesundheitswert des bestimmten Geräts der Vielzahl von Geräten umfasst.

2. Vorrichtung nach Anspruch 1, wobei die Verarbeitungseinheit dazu eingerichtet ist, auf einen Datenbewertungsalgorithmus oder eine Datenbewertungsfunktion zuzugreifen und diese zu implementieren, und wobei der Datenbewertungsalgorithmus oder die Datenbewertungsfunktion dazu eingerichtet ist, die Analyse der von der Verarbeitungseinheit für das bestimmte Gerät der Vielzahl von Geräten empfangenen Industriedaten zu verarbeiten, um das Analyseergebnis zu bestimmen.

3. Vorrichtung nach einem der Ansprüche 1 bis 2, wobei die Machine-Learning-Umgebung auf einem Datenspeicher der Vorrichtung angeordnet ist.

4. Vorrichtung nach einem der Ansprüche 1 bis 3, wobei die Vielzahl von trainierten Machine-Learning-Modellen auf einem Datenspeicher der Vorrichtung angeordnet sind.

5. Verfahren zur Überwachung von Industriedaten, umfassend:
- Empfangen von Industriedaten von einem bestimmten Gerät einer Vielzahl von Geräten durch eine Eingabeeinheit;
- Zugreifen auf eine Machine-Learning-Umgebung durch eine Verarbeitungseinheit;
- Zugreifen durch die Verarbeitungseinheit auf ein trainiertes Machine-Learning-Modell für das bestimmte Gerät aus einer Vielzahl von trainierten Machine-Learning-Algorithmen, wobei die Vielzahl von trainierten Machine-Learning-Modellen jeweils einem anderen Gerät der Vielzahl von Geräten zugeordnet ist, wobei die Vielzahl von trainierten Machine-Learning-Modellen von der Machine-Learning-Umgebung getrennt sind, wobei jedem Gerät der Vielzahl von Geräten ein zugeordnetes Objektmodell zugeordnet ist, und wobei das trainierte Machine-Learning-Modell für dieses Gerät im Objektmodell für dieses Gerät enthalten ist; wobei jeder trainierte Machine-Learning-Algorithmus auf der Grundlage einer Vielzahl von Trainings-Industriemonitoringdaten und zugehörigen Ground-Truth-Informationen trainiert wurde, wobei die Vielzahl von Trainings-Industriemonitoringdaten und zugehörigen Ground-Truth-Informationen für das Gerät oder den Gerätetyp bestimmt waren, der dem trainierten Machine-Learning-Algorithmus zugeordnet ist, wobei die Ground-Truth-Informationen für das Gerät oder den Gerätetyp bestimmt waren, der dem trainierten Machine-Learning-Algorithmus zugeordnet ist; und wobei die mit der Vielzahl von Trainings-Industriemonitoringdaten verbundenen Ground-Truth-Informationen zugehörige Gesundheitswertinformationen für das Gerät oder den Gerätetyp enthalten, die mit bestimmten Trainings-Industriemonitoringdaten verbunden sind;
- Implementieren der Machine-Learning-Umgebung durch die Verarbeitungseinheit und Ausführen des trainierten Machine-Learning-Modells für das bestimmte Gerät, um die von dem bestimmten Gerät der Vielzahl von Geräten empfangenen Industriedaten zu analysieren; und
- Ausgeben eines Analyseergebnisses durch eine Ausgabeeinheit, das mit der Analyse der von dem bestimmten Gerät der Vielzahl von Geräten empfangenen Industriedaten verbunden ist, wobei das Analyseergebnis einen Gesundheitswert des bestimmten Geräts der Vielzahl von Geräten umfasst.

6. Verfahren nach Anspruch 5, wobei das Verfahren das Zugreifen und Implementieren eines Datenbewertungsalgorithmus oder einer Datenbewertungsfunktion durch die Verarbeitungseinheit umfasst, und wobei mit dem Datenbewertungsalgorithmus oder der Datenbewertungsfunktion die Analyse der von der Verarbeitungseinheit für das bestimmte Gerät der Vielzahl von Geräten empfangenen Industriedaten verarbeitet wird, um das Analyseergebnis zu bestimmen.

7. Verfahren nach einem der Ansprüche 5 bis 6, wobei die Machine-Learning-Umgebung auf einem Speicher der Vorrichtung angeordnet ist und/oder wobei die Vielzahl von trainierten Machine-Learning-Modellen auf einem Speicher der Vorrichtung angeordnet sind.

## Revendications

1. Appareil de surveillance de données industrielles, comprenant :
- une unité d'entrée ;
- une unité de traitement ; et
- une unité de sortie ;
dans lequel l'unité d'entrée est configurée pour recevoir des données de surveillance industrielles provenant d'une pluralité de dispositifs ;
dans lequel l'unité de traitement est configurée pour accéder à un environnement d'apprentissage machine ;
dans lequel l'unité de traitement est configurée pour accéder à une pluralité de modèles d'apprentissage machine entraînés, dans lequel la pluralité de modèles d'apprentissage machine entraînés correspondent chacun à un différent dispositif de la pluralité de dispositifs, dans lequel la pluralité de modèles d'apprentissage machine entraînés sont distincts de l'environnement d'apprentissage machine, et dans lequel chaque dispositif de la pluralité de dispositifs a un modèle d'objet associé, et dans lequel le modèle d'apprentissage machine entraîné pour ce dispositif est compris à l'intérieur du modèle d'objet pour ce dispositif ; dans lequel chaque algorithme d'apprentissage machine entraîné a été entraîné sur la base d'une pluralité de données de surveillance industrielles d'entraînement et d'informations de réalité de terrain associées, dans lequel la pluralité de données de surveillance industrielles d'entraînement et les informations de réalité de terrain associées étaient pour le dispositif ou type de dispositif associé à l'algorithme d'apprentissage machine entraîné, dans lequel les informations de réalité de terrain étaient pour le dispositif ou type de dispositif associé à l'algorithme d'apprentissage machine entraîné ; et dans lequel les informations de réalité de terrain associées à la pluralité de données de surveillance industrielles d'entraînement comprenaient des informations de note d'évaluation de condition associées pour le dispositif ou type de dispositif associé à des données de surveillance industrielles d'entraînement spécifiques,
dans lequel, en ce qui concerne des données de surveillance industrielles dont la réception en provenance d'un dispositif particulier de la pluralité de dispositifs est attendue, l'appareil est configuré pour mettre en œuvre l'environnement d'apprentissage machine et exécuter le modèle d'apprentissage machine entraîné compris à l'intérieur du modèle d'objet pour le dispositif particulier pour analyser des données de surveillance industrielles reçues en provenance du dispositif particulier de la pluralité de dispositifs ; et
dans lequel l'unité de sortie est configurée pour sortir un résultat d'analyse associé à l'analyse de données de surveillance industrielles reçues en provenance du dispositif particulier de la pluralité de dispositifs, et dans lequel le résultat d'analyse comprend une note d'évaluation de condition du dispositif particulier de la pluralité de dispositifs.

2. Appareil selon la revendication 1, dans lequel l'unité de traitement est configurée pour accéder à un algorithme ou à une fonction de note d'évaluation de données et mettre en œuvre celui-ci ou celle-ci, et dans lequel l'algorithme ou la fonction de note d'évaluation de données est configuré(e) pour traiter l'analyse des données de surveillance industrielles reçues en provenance de l'unité de traitement pour le dispositif particulier de la pluralité de dispositifs pour déterminer le résultat d'analyse.

3. Appareil selon de quelconques des revendications 1 et 2, dans lequel l'environnement d'apprentissage machine est situé sur un organe de stockage de données de l'appareil.

4. Appareil selon de quelconques des revendications 1 à 3, dans lequel la pluralité de modèles d'apprentissage machine entraînés sont situés sur un organe de stockage de données de l'appareil.

5. Procédé de surveillance de données industrielles, comprenant :
- la réception, par une unité d'entrée, des données de surveillance industrielles de réception en provenance d'un dispositif particulier d'une pluralité de dispositifs ;
- l'accès, par une unité de traitement, à un environnement d'apprentissage machine ;
l'apprentissage de modèle pour le dispositif particulier à partir d'une pluralité d'algorithme d'apprentissage machine entraînés, dans lequel la pluralité de modèles d'apprentissage machine entraînés correspondent chacun à un différent dispositif de la pluralité de dispositifs, dans lequel la pluralité de modèles d'apprentissage machine entraînés sont distincts de l'environnement d'apprentissage machine, dans lequel chaque dispositif de la pluralité de dispositifs a un modèle d'objet associé, et dans lequel le modèle d'apprentissage machine entraîné pour ce dispositif est compris à l'intérieur du modèle d'objet pour ce dispositif ; dans lequel chaque algorithme d'apprentissage machine entraîné a été entraîné sur la base d'une pluralité de données de surveillance industrielles d'entraînement et d'informations de réalité de terrain associées, dans lequel la pluralité de données de surveillance industrielles d'entraînement et les informations de réalité de terrain associées étaient pour le dispositif ou type de dispositif associé à l'algorithme d'apprentissage machine entraîné, dans lequel les informations de réalité de terrain étaient pour le dispositif ou type de dispositif associé à l'algorithme d'apprentissage machine entraîné ; et dans lequel les informations de réalité de terrain associées à la pluralité de données de surveillance industrielles d'entraînement comprenaient des informations de note d'évaluation de condition associées pour le dispositif ou type de dispositif associé à des données de surveillance industrielles d'entraînement spécifiques ;
- la mise en œuvre, par l'unité de traitement, de l'environnement d'apprentissage machine et l'exécution du modèle d'apprentissage machine entraîné pour le dispositif particulier pour analyser les données de surveillance industrielles reçues en provenance du dispositif particulier de la pluralité de dispositifs ; et
- la sortie, par une unité de sortie, d'un résultat d'analyse associé à l'analyse de données de surveillance industrielles reçues en provenance du dispositif particulier de la pluralité de dispositifs, et dans lequel le résultat d'analyse comprend une note d'évaluation de condition du dispositif particulier de la pluralité de dispositifs.

6. Procédé selon la revendication 5, dans lequel le procédé comprend, par l'unité de traitement, l'accès à un algorithme ou à une fonction de note d'évaluation de données, et la mise en œuvre de celui-ci ou de celle-ci, et le traitement, avec l'algorithme ou la fonction de note d'évaluation de données, de l'analyse des données de surveillance industrielles reçues en provenance de l'unité de traitement pour le dispositif particulier de la pluralité de dispositifs pour déterminer le résultat d'analyse.

7. Procédé selon de quelconques des revendications 5 ou 6, dans lequel l'environnement d'apprentissage machine est situé sur une mémoire d'un appareil selon la revendication 1, et/ou dans lequel la pluralité de modèles d'apprentissage machine entraînés sont situés sur une mémoire de l'appareil.
